# FASCICULE DE BREVET EUROPEEN

(11) **EP 2 868 130 B1**
(45) Date de publication et mention de la délivrance du brevet: **20.04.2016**
(21) Numéro de dépôt: 13737345.2
(22) Date de dépôt: 20.06.2013
(51) Int. Cl.: H04W 12/06, H04L 29/06

(54) **MISE EN PLACE D'UNE ASSOCIATION DE SECURITE LORS DE L'ATTACHEMENT D'UN TERMINAL A UN RESEAU D'ACCES**
IMPLEMENTIERUNG EINES SICHERHEITSASSOZIATION WÄHREND DES ANBINDUNG EINES ENDGERÄTS AN EIN ZUGANGSNETZ
IMPLEMENTING A SECURITY ASSOCIATION DURING THE ATTACHMENT OF A TERMINAL TO AN ACCESS NETWORK

(30) Priorité: 02.07.2012 FR 1256330
(43) Date de publication de la demande: 06.05.2015
(73) Titulaire: Orange, 75015 Paris (FR)
(72) Inventeur: BOURNELLE, Julien, F-75012 Paris (FR); MORAND, Lionel, F-92240 Malakoff (FR)
(86) Numéro de dépôt international: PCT/FR2013/051447
(87) Numéro de publication internationale: WO 2014/006295

(56) Documents cités:
- WO-A1-2009/068740
- "3rd Generation Partnership Project; Technical Specification Group Services and System Aspects; Generic Authentication Architecture (GAA); Generic Bootstrapping Architecture (GBA) (Release 11)", 3GPP STANDARD; 3GPP TS 33.220, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V11.2.0, 16 mars 2012 (2012-03-16), pages 1-91, XP050580312,

## Description

Le domaine de l'invention est celui des télécommunications, et plus particulièrement des télécommunications par réseaux mobiles.

L'organisme de normalisation 3GPP a défini une architecture appelée GBA (« Generic Bootstrapping Architecture ») "3rd Generation Partnership Project; Technical Specification Group Services and System Aspects; Generic Authentication Architecture (GAA); Generic Bootstrapping Architecture (GBA) (Release 11)",3GPP STANDARD; 3GPP TS 33.220, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V11.2.0, 16 mars 2012 (2012-03-16), pages 1-91, XP050580312, dont le but est de permettre l'authentification d'un terminal mobile pour créer une association de sécurité entre le terminal mobile et une application. Cette architecture comporte un serveur de fonction d'amorçage, dit BSF (« Bootstrapping Function Server ») qui sert de tiers de confiance permettant l'établissement d'une association de sécurité le terminal et l'application

Le processus d'authentification utilisé dans cette architecture se fait donc en deux temps, avec un premier processus d'authentification du terminal mobile auprès du serveur d'amorçage BSF. Cette phase d'authentification permet d'établir entre le terminal et le BSF une association de sécurité basée sur une clé partagée générée au cours de l'authentification. Cette clé partagée permet par la suite d'établir une association de sécurité entre le terminal et une application ayant accès au BSF pour récupérer le matériel de sécurité nécessaire à authentifier le terminal.

Dans le cas où le terminal mobile cherche à se connecter via un réseau d'accès non-3GPP, une étape supplémentaire d'attachement du terminal au réseau d'accès est effectuée au préalable, typiquement en utilisant le protocole EAP (pour Extensible Authentification Protocol), pour authentifier le terminal afin de lui permettre d'accéder au réseau d'accès non-3GPP.

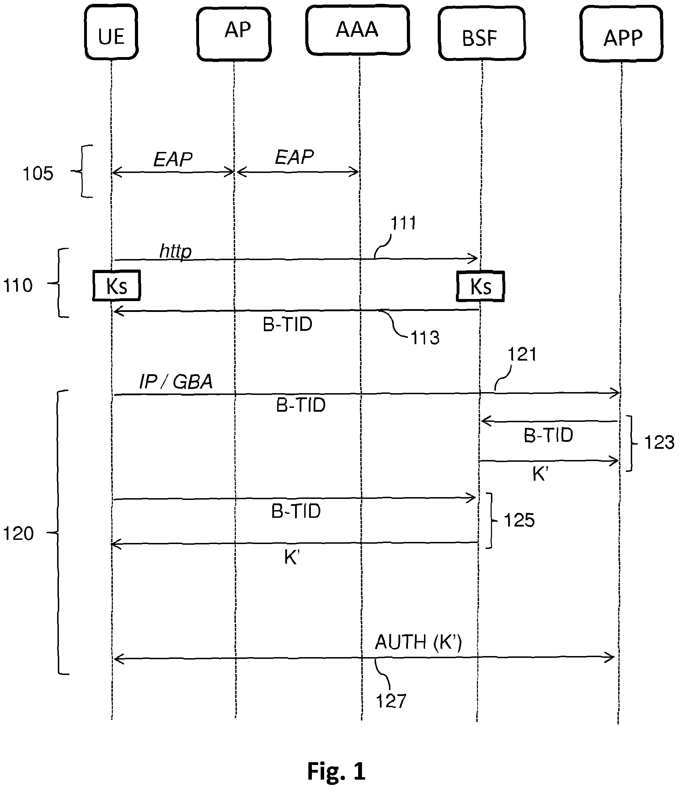

La **figure 1** illustre ce processus d'authentification lorsqu'un terminal mobile cherche à se connecter à une application via un réseau d'accès non-3GPP.

Dans un premier temps, le terminal mobile UE s'attache au réseau d'accès non-3GPP, en s'adressant à un serveur d'authentification AAA/EAP par l'intermédiaire d'un point d'accès AP de ce réseau et en procédant à une première authentification en utilisant le protocole d'authentification EAP (étape 105).

Une fois le terminal UE attaché au réseau d'accès non-3GPP, il peut procéder ensuite à une deuxième procédure d'authentification avec l'infrastructure GBA. Ainsi, le terminal UE, muni d'une carte SIM, s'authentifie tout d'abord auprès d'un serveur de fonction d'amorçage BSF (étape 110), en utilisant une connexion basée sur le protocole http (étape 111).

Cette authentification a pour résultat une clé de sécurité Ks, valable pour une durée déterminée, fournie par le serveur d'amorçage BSF. Le serveur d'amorçage BSF fournit également au terminal un identifiant de session B-TID associé à la clé de sécurité Ks, ainsi que la durée de validité de la clé (étape 113).

Ultérieurement, lorsque le terminal souhaite accéder à une application APP, il s'authentifie mutuellement avec cette application APP (étape 120), en ouvrant une connexion avec cette application APP (étape 121), en indiquant à cette application qu'il souhaite être authentifié selon la technique GBA, et en lui fournissant l'identifiant de session B-TID.

L'application APP contacte alors le serveur BSF pour lui fournir l'identifiant de session B-TID, et le serveur BSF lui répond en lui fournissant une nouvelle clé K' dérivée à partir de la clé de sécurité et du nom de l'application (étape 123). Le terminal effectue les mêmes opérations de son côté (étape 125).

Ainsi le terminal et l'application dispose d'une même clé K' qu'ils peuvent utiliser pour s'authentifier mutuellement et sécuriser la connexion IP entre eux (étape 127).

Cette procédure d'authentification implique donc que le terminal ouvre son navigateur http pour pouvoir ensuite ouvrir une connexion IP avec l'application, alors que cette connexion n'est pas nécessairement basée sur le protocole http.

Par ailleurs, le terminal mobile s'est préalablement authentifié auprès d'un serveur AAA du réseau d'accès, lors de son attachement au réseau, avant de s'authentifier auprès du serveur d'amorçage BSF. Il y a donc double authentification du terminal mobile, une première fois lors de son attachement au réseau puis une seconde fois pour créer une association de sécurité avec le serveur d'amorçage BSF, ce qui induit des retards lors de l'accès du terminal à l'application APP, une complexité accrue et augmente les échanges de messages sur le réseau.

La présente invention a pour but de résoudre les inconvénients de la technique antérieure en fournissant un procédé de mise en place d'une association de sécurité, pour un terminal s'attachant à un réseau d'accès, en particulier un réseau d'accès de type non-3GPP, qui ne nécessite qu'une unique phase conjointe d'attachement au réseau et d'association de sécurité.

Selon un premier aspect de l'invention, il est proposé un procédé de mise en place d'une association de sécurité pour un terminal s'attachant à un réseau d'accès, comportant les étapes suivantes, exécutées par un serveur d'authentification du réseau d'accès, suite à la réception d'une requête d'attachement au réseau venant du terminal :
réception, depuis un serveur de fonction d'amorçage, d'un premier message contenant au moins un paramètre d'association de sécurité ;
authentification du terminal au moyen d'au moins un premier paramètre d'authentification fourni par un serveur d'abonnés résidentiel de ce terminal ; et
envoi au terminal authentifié d'un message d'association de sécurité contenant le au moins un paramètre d'association de sécurité.

Ainsi, une fois reçu ce message d'association de sécurité, le terminal est non seulement attaché au réseau d'accès, mais dispose également d'un paramètre d'association de sécurité, utilisable pour une authentification mutuelle avec une application. Les procédures d'attachement au réseau et de mise en place d'une association de sécurité sont donc combinées au sein d'une seule procédure, ce qui réduit la signalisation nécessaire pour ces deux opérations.

Dans un premier mode de réalisation, le premier message contient le premier paramètre d'authentification, obtenu par le serveur de fonction d'amorçage auprès du serveur d'abonnés résidentiel, ce qui permet au serveur d'authentification de récupérer simultanément les paramètres d'authentification et d'association de sécurité, en minimisant le nombre de messages utilisés.

Selon une caractéristique avantageuse, au moins une partie du paramètre d'association de sécurité est déterminée par le serveur de fonction d'amorçage en fonction d'au moins une partie du premier paramètre d'authentification reçu du serveur d'abonnés résidentiel, ce qui permet d'utiliser les premiers paramètres d'authentification aussi bien pour l'authentification du terminal proprement dite que pour la mise en place de l'association de sécurité.

Dans un autre mode de réalisation, le serveur d'authentification reçoit un deuxième message contenant le premier paramètre d'authentification du serveur d'abonnés résidentiel, suite à l'envoi par le serveur d'authentification d'une requête d'authentification à ce serveur d'abonnés résidentiel, ce qui permet de décorréler les processus d'authentification et de mise en place d'une association de sécurité.

Selon une caractéristique avantageuse, au moins une partie du paramètre d'association de sécurité est déterminée par le serveur de fonction d'amorçage en fonction d'au moins une partie d'un deuxième paramètre d'authentification reçu du serveur d'abonnés résidentiel. L'authentification et l'association de sécurité se font donc à partir de paramètres d'authentification distincts, ce qui renforce la sécurité du processus.

Selon une caractéristique particulière de l'invention, le au moins un paramètre d'association de sécurité est au moins un paramètre parmi un identifiant de session sécurisée et une durée de validité d'une clé de session sécurisée. Selon une autre caractéristique particulière de l'invention, le au moins un premier paramètre d'authentification est au moins un paramètre parmi une valeur aléatoire, un paramètre d'identification du réseau et une valeur de réponse attendue lorsque le terminal utilise cette valeur aléatoire pour s'authentifier.

Dans un mode de réalisation avantageux, le message d'association de sécurité est un message selon le protocole EAP comprenant un champ de données contenant le au moins un paramètre d'association de sécurité, afin de protéger ce paramètre d'association de sécurité. En particulier, le message d'association de sécurité est un message selon le protocole EAP-AKA qui peut comprendre un entête selon le protocole d'authentification AKA avant le champ de données contenant les paramètres d'association de sécurité.

Selon un autre mode de réalisation particulier, l'association de sécurité est une association de sécurité selon l'architecture GBA. Selon un autre mode de réalisation particulier, le réseau d'accès est un réseau d'accès de type non-3GPP.

Selon un autre objet de l'invention, il est proposé un serveur d'authentification adapté pour mettre en place d'une association de sécurité pour un terminal s'attachant à un réseau d'accès, comportant un module d'émission-réception apte à recevoir une demande d'attachement à ce réseau d'accès émise par le terminal, ce module d'émission-réception étant configuré en outre pour :
recevoir, depuis un serveur de fonction d'amorçage, un premier message contenant au moins un paramètre d'association de sécurité ;
envoyer au terminal un message d'association de sécurité contenant cet au moins un paramètre d'association de sécurité, suite à l'authentification du terminal par le serveur d'authentification au moyen d'au moins un premier paramètre d'authentification fourni par un serveur d'abonnés résidentiel de ce terminal.

Ce serveur présente des avantages analogues à ceux du procédé précédemment présenté.

Selon un autre objet de l'invention, il est proposé un terminal, apte à déclencher la mise en place d'une association de sécurité lors de son attachement à un réseau d'accès, comportant un module d'émission-réception adapté pour :
envoyer une demande d'attachement au réseau d'accès vers un point d'accès du réseau d'accès ;
recevoir, depuis ce point d'accès, un message contenant au moins un premier paramètre d'authentification fourni par un serveur d'abonnés résidentiel du terminal ;
envoyer, vers le point d'accès, une réponse contenant une valeur calculée par le terminal à partir du au moins un premier paramètre d'authentification ;
recevoir, depuis le point d'accès, un message d'association de sécurité contenant au moins un paramètre d'association de sécurité apte à être utilisé par le terminal pour s'authentifier lors d'une connexion avec une application.

Dans un mode particulier de réalisation, les différentes étapes du procédé selon l'invention sont déterminées par des instructions de programmes d'ordinateurs. En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes d'un procédé tel que décrit ci-dessus. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions des programmes d'ordinateur tels que mentionnés ci-dessus. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

D'autres caractéristiques et avantages apparaîtront à la lecture de modes de réalisation préférés décrits en référence aux figures dans lesquelles, outre la figure 1 déjà discutée précédemment :
- la figure 2 représente de façon schématique les équipements d'un réseau de télécommunication mobile impliqués dans la présente invention ;
- la figure 3A représente les étapes d'un procédé de mise en place d'une association de sécurité pour un terminal, selon un premier mode de réalisation de l'invention ;
- la figure 3B représente les étapes d'un procédé de mise en place d'une association de sécurité pour un terminal, selon un deuxième mode de réalisation de l'invention ; et
- les figures 4A à 4C illustrent l'utilisation de paquets de données selon le protocole EAP dans un mode de réalisation avantageux de l'invention.

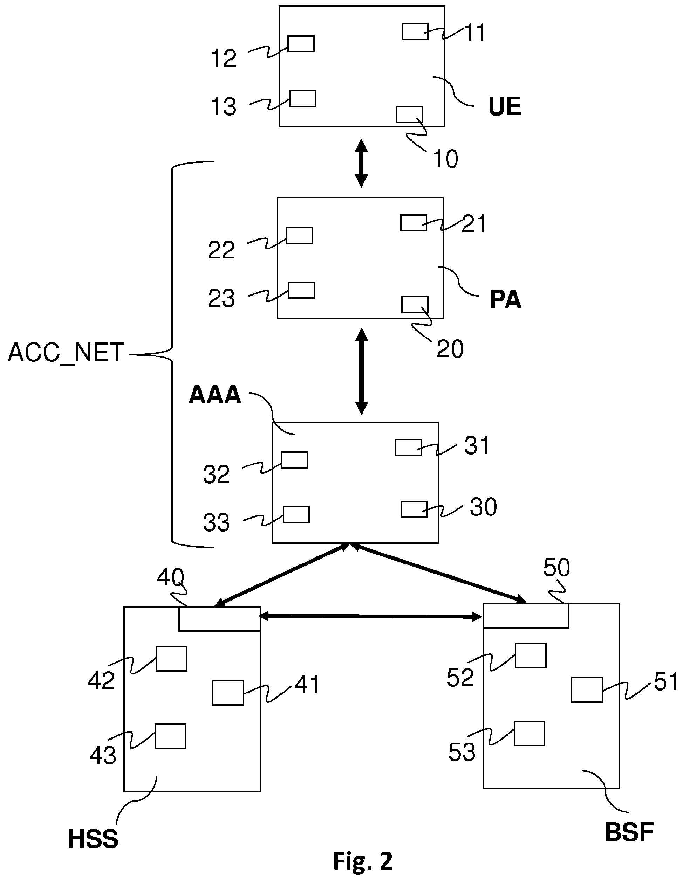

On se réfère tout d'abord à la **figure 2** qui représente de façon schématique les équipements d'un réseau de télécommunication mobile impliqués dans la présente invention.

Les équipements mettant en oeuvre l'invention sont un terminal mobile UE, un point d'accès réseau AP et un serveur d'authentification AAA, appartenant tous deux à un réseau d'accès ACC_NET, un serveur de fonction d'amorçage BSF et un serveur d'abonnés HSS.

L'invention est avantageusement mise en oeuvre pour un accès via un réseau d'accès de type non-3GPP, cet accès étant de type WiFi (i.e. selon une norme IEEE 802.11x), WiMax (i.e. selon une norme IEEE 802.16x) ou selon un mode de connexion VPN (pour Virtual Private Network), utilisant par exemple le protocole IKEv2.

Ainsi, dans un mode de réalisation où l'accès au réseau d'accès ACC_NET se fait selon la norme WiFi, le point d'accès réseau AP est une passerelle d'accès ou un routeur WiFi. Dans un mode de réalisation où cet accès se fait selon la norme WiMax, le point d'accès réseau AP est une station de base WiMax. Enfin, dans un mode de réalisation où l'accès se fait selon un mode de connexion VPN, le point d'accès réseau AP est un serveur VPN.

Le terminal mobile UE peut être, par exemple, un terminal de téléphonie mobile, un ordinateur portable, un assistant personnel numérique, ou autre. Dans l'exemple représenté le terminal mobile UE est un terminal de téléphonie mobile appartenant à un utilisateur.

Comme représenté cette la figure 2, le terminal mobile UE comporte un module d'émission-réception 10 configuré pour émettre et recevoir des données notamment vers et depuis le point d'accès réseau AP. Il comporte également un processeur 11, une mémoire vive 12 et une mémoire morte 13.

Le point d'accès réseau AP du réseau d'accès ACC_NET est une unité comportant un processeur 21, une mémoire vive 22 et une mémoire morte 23, ainsi qu'un module d'émission-réception 20 (typiquement une ou plusieurs antenne(s)) configuré pour communiquer avec le terminal mobile UE et le serveur d'authentification AAA.

Le serveur d'authentification AAA du réseau d'accès ACC_NET présente la structure conventionnelle d'un ordinateur. Il comporte un processeur 31, une mémoire vive 32 et une mémoire morte 33. Il comporte un module d'émission-réception 30 configuré pour communiquer avec point d'accès réseau AP, le serveur de fonction d'amorçage BSF et le serveur d'abonné HSS.

Ce serveur d'authentification AAA est en particulier adapté pour mettre en place d'une association de sécurité, par exemple de type GBA, pour un terminal cherchant à s'attacher au réseau d'accès ACC_NET.

Pour ce faire, son module d'émission-réception 30 peut recevoir une demande d'attachement au réseau venant du terminal, émettre une requête d'association de sécurité au serveur de fonction d'amorçage BSF, suite à la réception d'une telle demande d'attachement au réseau, recevoir un premier message, dit de réponse d'association de sécurité, comportant des paramètres d'association de sécurité et éventuellement des paramètres d'authentification, depuis le serveur de fonction d'amorçage, et envoyer au terminal un message d'association de sécurité comportant les paramètres d'association de sécurité au terminal, si ce dernier est authentifié avec succès, afin de signifier à ce terminal qu'il est bien attaché au réseau et authentifié par le serveur de fonction d'amorçage BSF.

Le serveur de fonction d'amorçage BSF présente également la structure conventionnelle d'un ordinateur. Il comporte un processeur 41, une mémoire vive 42 et une mémoire morte 43. Il comporte un module d'émission-réception 40 configuré pour communiquer avec le serveur d'authentification AAA et le serveur d'abonné HSS.

Le serveur d'abonné HSS présente aussi la structure conventionnelle d'un ordinateur. Il comporte un processeur 51, une mémoire vive 52 et une mémoire morte 53. Il comporte un module d'émission-réception 50 configuré pour communiquer avec le serveur d'authentification AAA et le serveur de fonction d'amorçage BSF, notamment afin de leur envoyer des paramètres d'authentification sur requête de leur part. Ce serveur d'abonnés HSS peut notamment être une base de données centralisée hébergeant les données du profil utilisateur associé au terminal mobile UE. Lorsque ce profil utilisateur supporte une association de sécurité (par exemple de type GBA), alors le serveur HSS stocke également une indication de cette caractéristique.

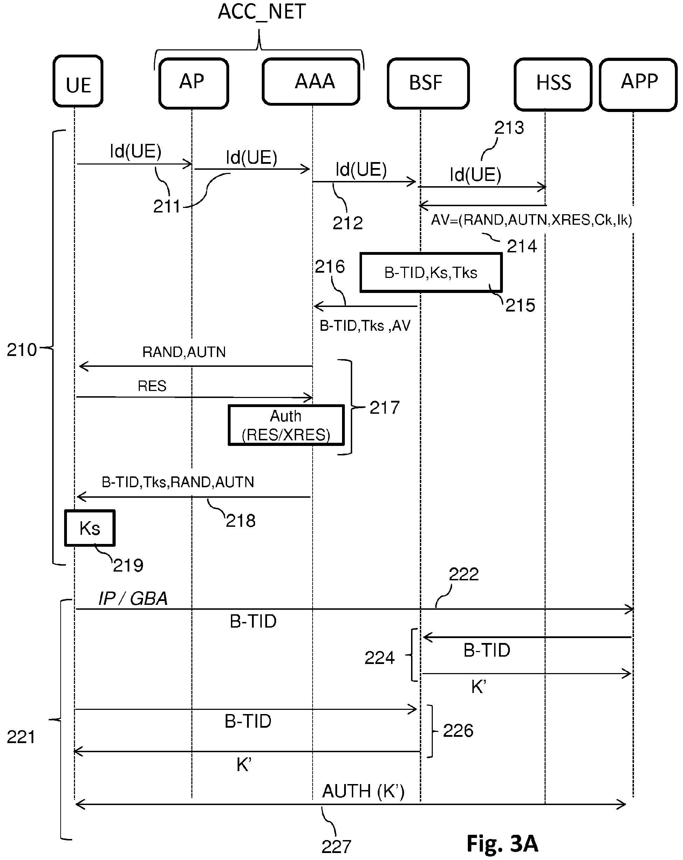

On se réfère maintenant à la **figure 3A**, qui illustre un procédé de mise en place d'une association de sécurité pour un terminal mobile UE s'attachant au réseau d'accès ACC_NET, selon un premier mode de réalisation de la présente invention.

Le procédé illustré sur cette figure 3A comporte une première phase 210 combinée d'authentification et de mise en place d'une association de sécurité, lors de l'attachement du terminal UE au réseau ACC_NET, suivie d'une deuxième phase 220 de connexion de le terminal mobile UE à une application APP au moyen de paramètres d'association de sécurité définis lors de cette association de sécurité.

L'association de sécurité employée dans ce procédé est typiquement une association de sécurité de type GBA (pour Generic Bootstrapping Architecture) entre le terminal mobile UE et toute application APP reposant sur cette technique GBA pour authentifier ce terminal mobile.

Au cours de la première phase 210, le terminal mobile UE demande tout d'abord son attachement auprès du réseau d'accès ACC_NET (par exemple au moyen d'un module client installé sur ce terminal UE), en envoyant une requête d'attachement au point d'accès réseau AP de ce réseau d'accès (étape 211).

Cette requête d'attachement peut notamment contenir un identifiant unique Id(UE), par exemple l'identité d'abonné mobile internationale IMSI (pour « International Mobile Subscriber Identity ») de l'utilisateur du terminal mobile UE.

Cette requête d'attachement est redirigée, par le point d'accès AP, au serveur d'authentification AAA de ce réseau d'accès (étape 211), afin que celui-ci puisse traiter cette demande.

Suite à la réception de cette requête d'attachement transmise par le point d'accès AP, le serveur AAA déclenche alors le processus d'authentification du terminal UE, en envoyant une requête d'association de sécurité au serveur de fonction d'amorçage BSF (étape 212), cette requête contenant l'identifiant Id(UE) du terminal UE. Cette requête d'association de sécurité peut être formatée selon le protocole Diameter ou le protocole MAP.

Suite à la réception de cette requête d'association de sécurité venant du serveur d'authentification AAA, le serveur de fonction d'amorçage BSF peut vérifier que l'identifiant unique Id(UE) de l'utilisateur du terminal mobile UE existe et a droit au service d'association de sécurité. Il interroge alors le serveur d'abonnés résidentiel HSS de ce terminal UE, afin de récupérer des paramètres d'authentification associés à l'utilisateur de ce terminal.

Pour ce faire, le serveur de fonction d'amorçage BSF envoie (étape 213) une requête d'authentification contenant l'identifiant Id(UE) de l'utilisateur abonné du terminal UE.

Suite à la réception de cette requête d'authentification, le serveur d'abonnés résidentiel HSS renvoie un, ou plusieurs, paramètre(s) d'authentification, ainsi qu'éventuellement des informations GUSS (« Generic User Security Settings ») au serveur de fonction d'amorçage BSF qui le(s) stocke.

En particulier, ces paramètres d'authentification peuvent prendre la forme d'un vecteur d'authentification AV comportant une valeur aléatoire RAND générée par le serveur d'abonnés HSS, un jeton d'authentification du réseau AUTN permettant d'authentifier le réseau, une valeur XRES de réponse attendue lorsque le terminal utilise la valeur aléatoire RAND pour s'authentifier, une clé de chiffrement Ck calculée à partir de cette valeur aléatoire RAND et une clé d'intégrité Ik calculée également à partir de cette valeur aléatoire RAND En d'autres termes, le vecteur d'authentification AV=(RAND,AUTN, XRES, Ck,Ik) est retourné par le serveur d'abonnés résidentiel HSS au serveur de fonction d'amorçage BSF.

Le serveur de fonction d'amorçage BSF génère ensuite au moins un paramètre d'association de session, notamment un identifiant de session B-TID et une durée de session Tks associée à une clé de session Ks (étape 215). En particulier, cette clé de session Ks peut être générée à partir de certains des paramètres d'authentification reçus du serveur d'abonnés résidentiel HSS, par exemple en concaténant les clés Ik et Ck du vecteur d'authentification AV introduit précédemment.

Le serveur de fonction d'amorçage BSF envoie ensuite un premier message, dit de réponse d'association de sécurité, au serveur d'authentification AAA contenant le(s) paramètre(s) d'association de session (e.g. l'identifiant de session B-TID et la durée de validité Tks de la clé de session Ks) généré(s) par le serveur BSF (étape 216).

Dans le mode de réalisation de la figure 3A, ce message de réponse d'association de sécurité contient également, parmi l'ensemble des paramètres d'authentification reçus du serveur HSS, au moins les paramètres d'authentification servant à authentifier le terminal UE auprès du serveur d'authentification AAA, c'est-à-dire la valeur aléatoire RAND, le jeton AUTN et la valeur XRES.

Ce message de réponse d'association de sécurité peut ainsi contenir l'ensemble du vecteur d'authentification AV=(RAND,AUTN,XRES,Ck,Ik), les clés Ck et Ik pouvant être utilisées par le serveur d'authentification AAA pour sécuriser la session d'accès après authentification ainsi que pour dériver d'autres clés transmises à l'accès.

Suite à la réception de ce premier message, le serveur d'authentification AAA peut procéder à l'authentification du terminal UE (étape 217), grâce notamment à la valeur aléatoire RAND, au jeton d'authentification AUTN et à la valeur XRES. Le serveur d'authentification AAA effectue cette procédure d'authentification du terminal UE en lui envoyant le RAND et le jeton AUTN dans un premier temps. Le terminal UE authentifie le réseau grâce au jeton AUTN. Si l'authentification du réseau est conclue avec succès, le terminal UE calcule ensuite une valeur de réponse d'authentification RES à partir de la valeur aléatoire RAND reçue du serveur d'authentification AAA, et renvoie cette valeur RES au serveur d'authentification AAA. En comparant les valeurs RES et XRES, le serveur d'authentification AAA peut alors authentifier la réponse du terminal UE.

Si le terminal UE est authentifié avec succès par le serveur d'authentification AAA (c'est-à-dire lorsque la valeur RES est égale à la valeur XRES), le serveur d'authentification AAA transmet ensuite (étape 218) au terminal UE un message d'association de sécurité contenant le(s) paramètre(s) d'association de sécurité (e.g. l'identifiant de session B-TID ainsi que la durée de validité Tks de la clé de session Ks).

Ce message d'association de sécurité peut avantageusement contenir en outre certains des paramètres d'authentification, en particulier la valeur aléatoire RAND, utilisée pour retrouver la clé de session Ks dans le terminal UE (étape 219). Dans ce cas, cette valeur aléatoire RAND est utilisée pour calculer les clés Ck et Ik selon la même procédure qu'au niveau du serveur HSS, et la clé de session Ks est déduite de ces clés Ck et Ik de la même manière qu'au niveau du serveur BSF.

Ce message d'association de sécurité peut également avantageusement contenir le jeton AUTN, ce qui permet de pouvoir interroger la carte SIM du terminal UE lorsque l'implémentation de ce terminal l'exige.

A ce stade, le terminal UE est attaché au réseau d'accès ACC_NET avec lequel il s'est authentifié et dispose en outre d'une association de sécurité qu'il peut utiliser pour se connecter à des applications reposant sur cette association de sécurité.

L'utilisateur du terminal UE peut alors se connecter à l'application APP, grâce à l'identifiant de session B-TID, lors d'une phase de connexion 221 similaire à la phase 120 décrite précédemment en relation avec la figure 1. En particulier, les étapes 221 à 227 de cette phase de connexion 221 sont respectivement similaires aux 121 à 127 de la phase de connexion illustrée en figure 1.

Ainsi, la procédure d'attachement du terminal UE au réseau d'accès ACC_NET et la procédure d'association de sécurité entre ce terminal UE et des applications permettant une authentification mutuelle au moyen de l'identifiant de session B-TID sont combinées au sein d'une seule et unique procédure, afin de diminuer la signalisation entre les différentes entités du réseau décrit en figure 2 et de simplifier l'utilisation de la procédure d'association de sécurité.

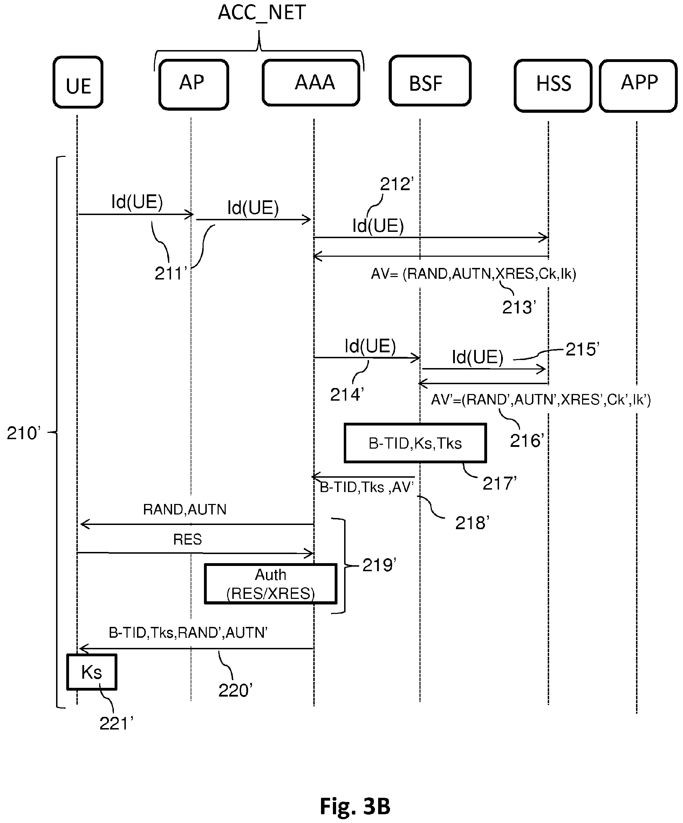

On se réfère maintenant à la **figure 3B**, qui illustre un autre mode de réalisation du procédé de mise en place d'une association de sécurité pour un terminal mobile UE s'attachant au réseau d'accès ACC_NET.

Dans cet autre mode de réalisation, le procédé met en oeuvre une première phase 210' combinée d'authentification et de mise en place d'une association de sécurités qui se distingue de la première phase 210, décrite précédemment en relation avec la figure 3A, en ce que l'authentification du terminal pour l'accès au réseau ACC_NET est décorrélée de la procédure d'association de sécurité.

Cette première phase 210' démarre ainsi par l'envoi (étape 211') d'une requête d'attachement du terminal UE au point d'accès réseau AP du réseau ACC_NET, laquelle est redirigée par ce point d'accès AP vers le serveur d'authentification AAA de ce réseau ACC_NET afin que celui-ci puisse traiter cette demande, similairement à l'étape 211 précédemment décrite.

Suite à la réception de cette requête d'attachement transmise par le point d'accès AP, le serveur AAA déclenche alors le processus d'authentification du terminal UE, en envoyant une requête d'authentification au serveur d'abonnés résidentiel HSS du terminal UE (étape 212'), cette requête contenant l'identifiant Id(UE) du terminal UE permettant de récupérer en retour (étape 213') un, ou plusieurs, premier(s) paramètre(s) d'authentification que le serveur d'authentification stocke en mémoire et utilise par la suite pour procéder à l'authentification du terminal UE par le réseau ACC_NET. En particulier, ces premiers paramètres d'authentification peuvent être sous la forme d'un premier vecteur d'authentification AV=(RAND,AUTN,XRES,Ck,Ik) tel qu'introduit précédemment.

Parallèlement à ce processus d'authentification (c'est-à-dire avant, après ou simultanément avec, ce processus d'authentification), le serveur d'authentification AAA déclenche le processus d'association de sécurité en envoyant une requête d'association de sécurité au serveur de fonction d'amorçage BSF (étape 214'), laquelle contient également l'identifiant Id(UE) de cet utilisateur abonné.

Suite à la réception de cette requête, le serveur de fonction d'amorçage BSF interroge le serveur d'abonnés résidentiel HSS du terminal UE (étape 215'), en lui envoyant une requête d'interrogation contenant l'identifiant Id(UE), afin que ce dernier lui retourne (étape 216') un message de réponse contenant un, ou plusieurs, deuxième(s) paramètre(s) d'authentification.

Ces paramètres d'authentification comprennent en particulier une deuxième valeur aléatoire RAND' générée par le serveur HSS, une clé de chiffrement Ck' calculée à partir cette valeur aléatoire RAND' et une clé d'intégrité Ik' également calculée à partir de cette valeur aléatoire RAND', afin de permettre aussi bien la génération d'une clé de session Ks par le serveur BSF que la récupération de cette clé de session Ks par le terminal UE. Un jeton AUTN' peut aussi être transmis afin de pouvoir interroger la carte SIM du terminal UE lorsque l'implémentation de ce terminal l'exige.

Dans un mode de réalisation particulier, le serveur d'abonnés résidentiel HSS renvoie un message contenant un deuxième vecteur d'authentification AV' comprenant l'ensemble de ces différents paramètres d'authentification, ainsi qu'une valeur XRES' de résultat attendu lorsque le terminal UE s'authentifie avec la valeur aléatoire RAND', auquel cas AV'=(RAND',AUTN',XRES',Ck',Ik').

Le serveur de fonction d'amorçage BSF stocke ces deuxièmes paramètres d'authentification après les avoir reçus et peut générer au moins un paramètre d'association de sécurité, notamment un identifiant de session B-TID et une clé de session Ks, ainsi qu'une durée de validité Tks associée à cette clé de session Ks, similairement à ce qui est fait dans le premier mode de réalisation (étape 217'). En particulier, la clé de session Ks peut être générée à partir des clés Ik' et Ck' du deuxième vecteur d'authentification AV', en les concaténant par exemple.

Ainsi, dans ce deuxième mode de réalisation, la clé de session Ks est obtenue à partir de paramètres d'authentification différents de ceux utilisés pour le processus d'authentification du terminal, ce qui est avantageux en termes de sécurité.

Le serveur de fonction d'amorçage BSF envoie (étape 218') ensuite un message au serveur d'authentification AAA contenant le(s) paramètre(s) d'association de sécurité (e.g. l'identifiant de session B-TID et la durée Tks de validité de la clé de session Ks).

Une fois reçu ce message, le serveur d'authentification AAA peut initier le processus d'authentification du terminal UE à l'aide des premiers paramètres d'authentification RAND, AUTN et XRES stockés lors de l'étape 213', similairement au processus d'authentification 217 déjà décrit.

Lorsque le terminal UE est authentifié avec succès par le serveur d'authentification AAA (c'est-à-dire lorsque le terminal UE retourne une valeur RES égale à la valeur XRES de résultat attendu), le serveur d'authentification AAA transmet alors (étape 220') au terminal UE un message d'association de sécurité contenant le(s) paramètre(s) d'association de sécurité, e.g. l'identifiant de session B-TID et la durée Tks de validité de la clé Ks.

Ce message d'association de sécurité contient en outre avantageusement certains des deuxièmes paramètres d'authentification, en particulier la valeur aléatoire RAND' permettant de retrouver la clé de session Ks dans le terminal UE (étape 219). Ainsi, cette valeur aléatoire RAND' est utilisée pour calculer les clés Ck' et Ik' selon la même procédure qu'au niveau du serveur HSS, la clé de session Ks étant déduite de ces clés Ck' et Ik' de la même manière qu'au niveau du serveur BSF.

Dans un mode de réalisation avantageux, on utilise le protocole EAP dans les messages échangés entre les entités mises en oeuvre dans ce procédé, et notamment entre le terminal utilisateur UE, le point d'accès AP et le serveur d'authentification AAA, afin de s'assurer que les données échangées dans ces messages sont protégées.

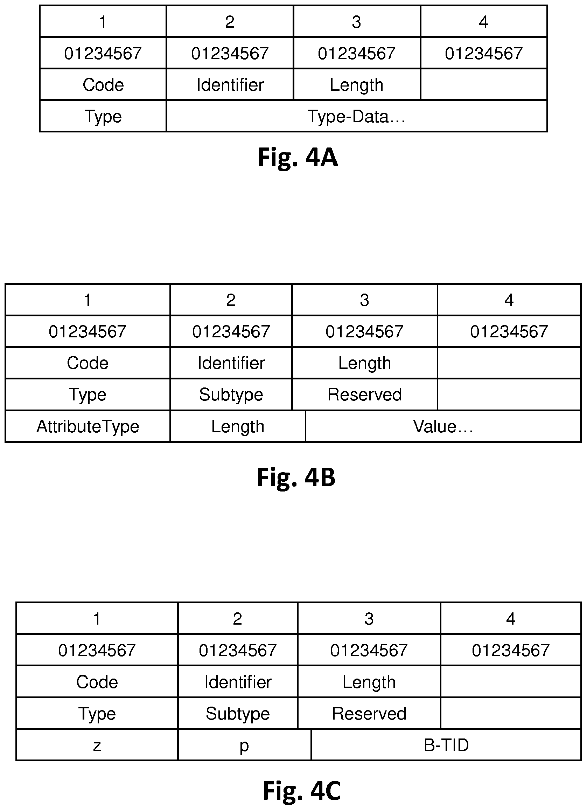

Comme spécifié dans la norme RFC 3748, les paquets de données selon le protocole EAP commencent par un entête formé de plusieurs champs : champ « Code », champ d'identification « Identifiers », champ de longueur « Length », champ « Type », suivis d'un autre champ « Type-Data » contenant des informations spécifiques au protocole d'authentification. Un tel entête, spécifique au protocole EAP, est illustré en **figure 4A**.

Dans le cas particulier d'un protocole EAP-AKA, le champ « Type-Data » commence par un entête spécifique comprenant un octet indiquant le sous-type, puis un octet réservé. La suite du message contient des attributs sous la forme Type-Longueur-Valeur (TLV). Un tel entête, spécifique au protocole EAP-AKA, est illustré en **figure 4B**.

Ce format de paquets peut être avantageusement employé, dans la présente invention, pour définir de nouveaux attributs spécifiques permettant de véhiculer les paramètres suivants au terminal UE :
- La valeur aléatoire RAND fournie par le serveur d'abonnés HSS ;
- Le paramètre AUTN permettant d'authentifier le réseau, également fourni par le serveur d'abonnés résidentiel HSS;
- L'identifiant de session B-TID généré par le serveur d'amorçage BSF ;
- La durée Tks de validité de la clé de session Ks, également calculée par le serveur d'amorçage BSF.

Les attributs x à z suivants peuvent ainsi être définis comme ci-dessous, afin de véhiculer chacun des paramètres respectivement indiqués ci-dessus :
- *Attribute Type : x* /*Length : n* / *Value : GBA RAND value*
- *Attribute Type : y* /*Length : m* /*Value : GBA AUTN value*
- *Attribute Type : z* /*Length : p* /*Value : B-TID value*
- *Attribute Type : w* /*Length : q* /*Value : session keylifetime value*

En fonction du mode de réalisation, les paramètres RAND et AUTN sont optionnels.

La **figure 4C** illustre ainsi un paquet mis en forme selon ce protocole EAP-AKA dans le cas particulier du transport d'un paramètre d'association de sécurité B-TID, utilisant un attribut de type z, de longueur p, avec comme valeur le paramètre B-TID.

Ainsi, dans ce mode de réalisation, un module client selon le protocole EAP est installé dans le terminal mobile UE, afin que celui-ci puisse, d'une part, formater sa requête d'attachement au réseau ACC_NET selon ce protocole EAP, en insérant son identité Id(UE) dans un champ de données d'un paquet formaté selon ce protocole EAP, tel qu'illustré sur les figures 4A ou 4B.

En outre, ce module client EAP est configuré pour interpréter un message d'attachement formaté selon le protocole EAP lorsqu'il est reçu par le terminal mobile UE en provenance du serveur d'authentification AAA, afin de récupérer un des paramètres d'association mentionnés précédemment, pour utilisation ultérieure lors de la connexion à une application APP.

Ce module client EAP peut prendre la forme d'un module logiciel mémorisé dans une des mémoires 12 ou 13 du terminal UE et mis en oeuvre par le processeur 11 de ce terminal UE.

Dans ce mode de réalisation, un module serveur selon le protocole EAP est également installé dans le serveur d'authentification AAA, afin que celui-ci puisse, d'une part, interpréter la requête d'attachement émanant du terminal UE et, d'autre part, formater le message d'association de sécurité contenant le(s) paramètre(s) d'association de sécurité selon ce protocole EAP, tel qu'illustré sur les figures 4A ou 4B. Ce module serveur EAP peut prendre la forme d'un module logiciel mémorisé dans une des mémoires 32 ou 33 du serveur d'authentification AAA et mis en oeuvre par le processeur 31 de ce serveur.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

Ainsi, les protocoles EAP et EAP-AKA ont été spécifiquement mentionnés pour formater les requêtes d'attachement et le message d"association de sécurité échangés entre le terminal UE et le serveur d'authentification AAA. Cependant, d'autres protocoles permettant de protéger les paramètres d'association de sécurité échangés entre ces entités peuvent être employés, comme par exemple les protocoles EAP-SIM, EAP-TTLS ou EAP-AKA'.

En outre, il a été indiquée précédemment que l'invention est particulièrement avantageuse lorsque le réseau d'accès ACC_NET est un réseau de type non-3GPP. L'invention ne se limite cependant pas à ce seul type de réseau d'accès.

Enfin, une association de sécurité de type GBA a été évoquée précédemment dans le cadre de l'authentification d'un terminal UE avec un serveur de fonction d'amorçage BSF supportant tous deux ce type d'association. Cependant, l'invention ne se limite cependant pas à ce seul type d'association de sécurité et peut s'appliquer à d'autres formes d'association de sécurité supportées par un terminal et un serveur de fonction d'amorçage, comme par exemple une association de sécurité selon le protocole Digest.

## Revendications

1. Procédé de mise en place d'une association de sécurité pour un terminal (UE) s'attachant à un réseau d'accès (ACC_NET), **caractérisé en ce qu'**il comporte les étapes suivantes, exécutées par un serveur d'authentification (AAA) du réseau d'accès, suite à la réception (211) d'une requête d'attachement au réseau venant du terminal :
réception (216,218'), depuis un serveur de fonction d'amorçage (BSF), d'un premier message contenant au moins un paramètre d'association de sécurité (B-TID,Tks) ;
authentification (217,219') du terminal au moyen d'au moins un premier paramètre d'authentification (RAND,AUTN,XRES) fourni par un serveur d'abonnés résidentiel (HSS) dudit terminal ; et
envoi (218,220') au terminal authentifié d'un message d'association de sécurité contenant ledit au moins un paramètre d'association de sécurité.

2. Procédé selon la revendication 1, **caractérisé en ce que** le premier message contient ledit premier paramètre d'authentification, obtenu (214) par le serveur de fonction d'amorçage auprès du serveur d'abonnés résidentiel.

3. Procédé selon la revendication 2, **caractérisé en ce qu'**au moins une partie (Tks) dudit paramètre d'association de sécurité est déterminée par le serveur de fonction d'amorçage en fonction d'au moins une partie (Ck,Ik) dudit premier paramètre d'authentification (AV) reçu du serveur d'abonnés résidentiel.

4. Procédé selon la revendication 1, **caractérisé en ce que** le serveur d'authentification reçoit (213') un deuxième message contenant le premier paramètre d'authentification du serveur d'abonnés résidentiel suite à l'envoi (212') par le serveur d'authentification d'une requête d'authentification audit serveur d'abonnés résidentiel.

5. Procédé selon la revendication 4, **caractérisé en ce qu'**au moins une partie (Tks) dudit paramètre d'association de sécurité est déterminée (217') par le serveur de fonction d'amorçage en fonction d'au moins une partie (Ck',IK') d'un deuxième paramètre d'authentification (AV') reçu (216') du serveur d'abonnés résidentiel.

6. Procédé selon l'une des revendications 1 à 5, **caractérisé en ce que** le au moins un paramètre d'association de sécurité est au moins un paramètre parmi un identifiant de session sécurisée (B-TID) et une durée de validité (Tks) d'une clé de session sécurisée (Ks).

7. Procédé selon l'une des revendications 1 à 6, **caractérisé en ce que** le au moins un premier paramètre d'authentification est au moins un paramètre parmi une valeur aléatoire (RAND), un paramètre d'identification du réseau (AUTN) et une valeur de réponse attendue lorsque le terminal utilise ladite valeur aléatoire pour s'authentifier (XRES)

8. Procédé selon l'une des revendications 1 à 7, **caractérisé en ce que** le message d'association de sécurité est un message selon le protocole EAP comprenant un champ de données contenant ledit au moins un paramètre d'association de sécurité.

9. Procédé selon la revendication 8, **caractérisé en ce que** le message d'association de sécurité est un message selon le protocole EAP-AKA comprenant un entête selon le protocole d'authentification AKA avant le champ de données contenant le au moins un paramètre d'association de sécurité.

10. Procédé selon l'une quelconque des revendications 1 à 9, **caractérisé en ce que** l'association de sécurité est une association de sécurité selon l'architecture GBA.

11. Procédé selon l'une quelconque des revendications 1 à 10, **caractérisé en ce que** le réseau d'accès est un réseau d'accès de type non-3GPP.

12. Serveur d'authentification (AAA) adapté pour mettre en place d'une association de sécurité pour un terminal (UE) s'attachant à un réseau d'accès (ACC_NET), comportant un module d'émission-réception (30) apte à recevoir une demande d'attachement audit réseau d'accès émise par le terminal, **caractérisé en ce que** le module d'émission-réception est configuré en outre pour :
recevoir (216,218'), depuis un serveur de fonction d'amorçage (BSF), un premier message contenant au moins un paramètre d'association de sécurité (B-TID,Tks) ; et
envoyer (218,220') au terminal un message d'association de sécurité contenant ledit au moins un paramètre d'association de sécurité (B-TID), suite à l'authentification (217,219') dudit terminal par le serveur d'authentification, au moyen d'au moins un premier paramètre d'authentification (RAND,AUTN,XRES) fourni par un serveur d'abonnés résidentiel (HSS) dudit terminal.

13. Terminal (UE) apte à déclencher la mise en place d'une association de sécurité lors de son attachement à un réseau d'accès (ACC_NET), comportant un module d'émission-réception (10) adapté pour :
envoyer (211) une demande d'attachement audit réseau d'accès vers un point d'accès (AP) dudit réseau d'accès ;
recevoir (217), depuis ledit point d'accès, un message contenant au moins un premier paramètre d'authentification (RAND,AUTN) fourni par un serveur d'abonnés résidentiel (HSS) du terminal ;
envoyer (217), vers ledit point d'accès, une réponse contenant une valeur (RES) calculée par le terminal à partir du au moins un premier paramètre d'authentification ;
recevoir (217), depuis ledit point d'accès, un message d'association de sécurité contenant au moins un paramètre d'association de sécurité (B-TID,Tks) apte à être utilisé par le terminal pour s'authentifier lors d'une connexion avec une application.

14. Programme d'ordinateur comportant des instructions pour l'exécution des étapes du procédé selon l'une quelconque des revendications 1 à 11 lorsque ledit programme est exécuté par un ordinateur.

15. Support d'enregistrement, lisible par un ordinateur, sur lequel est enregistré un programme d'ordinateur comprenant des instructions pour l'exécution des étapes du procédé selon l'une quelconque des revendications 1 à 11.

## Patentansprüche

1. Verfahren zum Einrichten einer Sicherheitsassoziation für ein Endgerät (UE), das sich mit einem Zugangsnetz (ACC_NET) verbindet, **dadurch gekennzeichnet, dass** es die folgenden Schritte aufweist, die von einem Authentifizierungsserver (AAA) des Zugangsnetzes nach dem Empfang (211) einer vom Endgerät kommenden Verbindungsanforderung mit dem Netz ausgeführt werden:
Empfang (216, 218'), von einem Bootfunktion-Server (BSF), einer ersten Mitteilung, die mindestens einen Sicherheitsassoziationsparameter (B-TID, Tks) umfasst;
Authentifizierung (217, 219') des Endgeräts mittels mindestens eines ersten Authentifizierungsparameters (RAND, AUTN, XRES), der von einem Teilnehmer-Home-Server (HSS) des Endgeräts geliefert wird; und
Senden (218, 220') einer Sicherheitsassoziationsmitteilung an das authentifizierte Endgerät, die den mindestens einen Sicherheitsassoziationsparameter umfasst.

2. Verfahren nach Anspruch 1, **dadurch gekennzeichnet, dass** die erste Mitteilung den ersten Authentifizierungsparameter umfasst, der vom Bootfunktion-Server beim Teilnehmer-Home-Server erhalten (214) wird.

3. Verfahren nach Anspruch 2, **dadurch gekennzeichnet, dass** mindestens ein Teil (Tks) des Sicherheitsassoziationsparameters vom Bootfunktion-Server abhängig von mindestens einem Teil (Ck, Ik) des ersten Authentifizierungsparameters (AV) bestimmt wird, der vom Teilnehmer-Home-Server empfangen wird.

4. Verfahren nach Anspruch 1, **dadurch gekennzeichnet, dass** der Authentifizierungsserver eine zweite Mitteilung empfängt (213'), die den ersten Authentifizierungsparameter des Teilnehmer-Home-Servers umfasst, nach dem Senden (212') einer Authentifizierungsanforderung durch den Authentifizierungsserver an den Teilnehmer-Home-Server.

5. Verfahren nach Anspruch 4, **dadurch gekennzeichnet, dass** mindestens ein Teil (Tks) des Sicherheitsassoziationsparameters vom Bootfunktion-Server abhängig von mindestens einem Teil (Ck', IK') eines zweiten Authentifizierungsparameters (AV') bestimmt wird (217'), der vom Teilnehmer-Home-Server empfangen wird (216').

6. Verfahren nach einem der Ansprüche 1 bis 5, **dadurch gekennzeichnet, dass** der mindestens eine Sicherheitsassoziationsparameter mindestens ein Parameter unter einer Kennung einer gesicherten Sitzung (B-TID) und einer Gültigkeitsdauer (Tks) eines gesicherten Sitzungsschlüssels (Ks) ist.

7. Verfahren nach einem der Ansprüche 1 bis 6, **dadurch gekennzeichnet, dass** der mindestens eine erste Authentifizierungsparameter mindestens ein Parameter unter einem Zufallswert (RAND), einem Identifikationsparameter des Netzes (AUTN) und einem erwarteten Antwortwert ist, wenn das Endgerät den Zufallswert verwendet, um sich zu authentifizieren (XRES).

8. Verfahren nach einem der Ansprüche 1 bis 7, **dadurch gekennzeichnet, dass** die Sicherheitsassoziationsmitteilung eine Mitteilung gemäß dem EAP-Protokoll ist, die ein Datenfeld enthält, das den mindestens einen Sicherheitsassoziationsparameter umfasst.

9. Verfahren nach Anspruch 8, **dadurch gekennzeichnet, dass** die Sicherheitsassoziationsmitteilung eine Mitteilung gemäß dem EAP-AKA-Protokoll ist, die einen Header gemäß dem AKA-Authentifizierungsprotokoll vor dem Datenfeld enthält, das den mindestens einen Sicherheitsassoziationsparameter umfasst.

10. Verfahren nach einem der Ansprüche 1 bis 9, **dadurch gekennzeichnet, dass** die Sicherheitsassoziation eine Sicherheitsassoziation gemäß der GBA-Architektur ist.

11. Verfahren nach einem der Ansprüche 1 bis 10, **dadurch gekennzeichnet, dass** das Zugangsnetz ein Zugangsnetz der Art nicht-3GPP ist.

12. Authentifizierungsserver (AAA), der geeignet ist, um eine Sicherheitsassoziation für ein Endgerät (UE) einzurichten, das sich mit einem Zugangsnetz (ACC_NET) verbindet, das ein Sende-Empfangs-Modul (30) aufweist, welches eine vom Endgerät gesendete Verbindungsanfrage mit dem Zugangsnetz empfangen kann, **dadurch gekennzeichnet, dass** das Sende-Empfangs-Modul außerdem konfiguriert ist, um:
von einem Bootfunktion-Server (BSF) eine erste Mitteilung zu empfangen (216, 218'), die mindestens einen Sicherheitsassoziationsparameter (B-TID, Tks) umfasst; und
an das Endgerät eine Sicherheitsassoziationsmitteilung zu senden (218, 220'), die den mindestens einen Sicherheitsassoziationsparameter (B-TID) umfasst, nach der Authentifizierung (217, 219') des Endgeräts durch den Authentifizierungsserver mittels mindestens eines ersten Authentifizierungsparameters (RAND, AUTN, XRES), der von einem Teilnehmer-Home-Server (HSS) des Endgeräts geliefert wird.

13. Endgerät (UE), das das Einrichten einer Sicherheitsassoziation bei seiner Verbindung mit einem Zugangsnetz (ACC_NET) auslösen kann, das ein Sende-Empfangs-Modul (10) aufweist, welches geeignet ist, um:
eine Verbindungsanfrage mit dem Zugangsnetz an einen Zugangspunkt (AP) des Zugangsnetzes zu senden (211);
vom Zugangspunkt eine Mitteilung zu empfangen (217), die mindestens einen ersten Authentifizierungsparameter (RAND, AUTN) umfasst, der von einem Teilnehmer-Home-Server (HSS) des Endgeräts geliefert wird;
an den Zugangspunkt eine Antwort zu senden (217), die einen vom Endgerät ausgehend von dem mindestens einen ersten Authentifizierungsparameter berechneten Wert (RES) umfasst;
vom Zugangspunkt eine Sicherheitsassoziationsmitteilung zu empfangen (217), die mindestens einen Sicherheitsassoziationsparameter (B-TID, Tks) umfasst, der vom Endgerät verwendet werden kann, um sich bei einer Verbindung mit einer Anwendung zu authentifizieren.

14. Computerprogramm, das Anweisungen zur Ausführung der Schritte des Verfahrens nach einem der Ansprüche 1 bis 11 aufweist, wenn das Programm von einem Computer ausgeführt wird.

15. Computerlesbarer Aufzeichnungsträger, auf dem ein Computerprogramm aufgezeichnet ist, das Anweisungen zur Ausführung der Schritte des Verfahrens nach einem der Ansprüche 1 bis 11 enthält.

## Claims

1. Method of setting up a security association for a terminal (UE) attaching to an access network (ACC_NET), **characterized in that** it comprises the following steps, executed by an authentication server (AAA) of the access network, subsequent to the reception (211) of a request for attachment to the network coming from the terminal:
reception (216,218'), from a bootstrapping function server (BSF), of a first message containing at least one security association parameter (B-TID,Tks);
authentication (217,219') of the terminal by means of at least one first authentication parameter (RAND,AUTN,XRES) provided by a home subscriber server (HSS) of said terminal; and
dispatching (218,220') to the authenticated terminal of a security association message containing said at least one security association parameter.

2. Method according to Claim 1, **characterized in that** the first message contains said first authentication parameter, obtained (214) by the bootstrapping function server from the home subscriber server.

3. Method according to Claim 2, **characterized in that** at least one part (Tks) of said security association parameter is determined by the bootstrapping function server as a function of at least one part (Ck,Ik) of said first authentication parameter (AV) received from the home subscriber server.

4. Method according to Claim 1, **characterized in that** the authentication server receives (213') a second message containing the first authentication parameter of the home subscriber server subsequent to the dispatching (212') by the authentication server of a request for authentication to said home subscriber server.

5. Method according to Claim 4, **characterized in that** at least one part (Tks) of said security association parameter is determined (217') by the bootstrapping function server as a function of at least one part (Ck',IK') of a second authentication parameter (AV') received (216') from the home subscriber server.

6. Method according to one of Claims 1 to 5, **characterized in that** the at least one security association parameter is at least one parameter from among a secure-session identifier (B-TID) and a duration of validity (Tks) of a secure session key (Ks).

7. Method according to one of Claims 1 to 6, **characterized in that** the at least one first authentication parameter is at least one parameter from among a random value (RAND), an identification parameter of the network (AUTN) and an expected response value when the terminal uses said random value to authenticate itself (XRES).

8. Method according to one of Claims 1 to 7, **characterized in that** the security association message is a message according to the EAP protocol comprising a data field containing said at least one security association parameter.

9. Method according to Claim 8, **characterized in that** the security association message is a message according to the EAP-AKA protocol comprising a header according to the AKA authentication protocol before the data field containing the at least one security association parameter.

10. Method according to any one of Claims 1 to 9, **characterized in that** the security association is a security association according to the GBA architecture.

11. Method according to any one of Claims 1 to 10, **characterized in that** the access network is an access network of non-3GPP type.

12. Authentication server (AAA) adapted for setting up a security association for a terminal (UE) attaching to an access network (ACC_NET), comprising a send-receive module (30) able to receive a request, sent by the terminal, for attachment to said access network, **characterized in that** the send-receive module is furthermore configured to:
receive (216,218'), from a bootstrapping function server (BSF), a first message containing at least one security association parameter (B-TID,Tks); and
dispatch (218,220') to the terminal a security association message containing said at least one security association parameter (B-TID), subsequent to the authentication (217,219') of said terminal by the authentication server, by means of at least one first authentication parameter (RAND,AUTN,XRES) provided by a home subscriber server (HSS) of said terminal.

13. Terminal (UE) able to trigger the setting up of a security association upon its attachment to an access network (ACC_NET), comprising a send-receive module (10) adapted for:
dispatching (211) a request for attachment to said access network to an access point (AP) of said access network;
receiving (217), from said access point, a message containing at least one first authentication parameter (RAND,AUTN) provided by a home subscriber server (HSS) of the terminal;
dispatching (217), to said access point, a response containing a value (RES) calculated by the terminal on the basis of the at least one first authentication parameter;
receiving (217), from said access point, a security association message containing at least one security association parameter (B-TID,Tks) able to be used by the terminal to authenticate itself during a connection with an application.

14. Computer program comprising instructions for the execution of the steps of the method according to any one of Claims 1 to 11 when said program is executed by a computer.

15. Recording medium, readable by a computer, on which is recorded a computer program comprising instructions for the execution of the steps of the method according to any one of Claims 1 to 11.
